# EUROPÄISCHE PATENTSCHRIFT

(11) **EP 1 880 823 B1**
(45) Veröffentlichungstag und Bekanntmachung des Hinweises auf die Patenterteilung: **03.02.2010**
(21) Anmeldenummer: 07114249.1
(22) Anmeldetag: 14.03.2005
(51) Int. Cl.: B29C 47/06, B29C 47/20, B29C 49/04, B29C 47/22, B29C 47/26, B29C 47/28, B29C 47/56

(54) **Vorrichtung zur Herstellung schlauchartiger Vorformlinge**
Device for manufacturing tube-like preforms
Dispositif de fabrication de préformes de type tuyaux

(30) Priorität: 30.03.2004 DE 102004015551
(43) Veröffentlichungstag der Anmeldung: 23.01.2008
(62) Teilanmeldung aus: 05716047.5
(73) Patentinhaber: Richter, Günter, 57610 Altenkirchen (DE)
(72) Erfinder: Richter, Günter, 57610 Altenkirchen (DE)
(74) Vertreter: Schaumburg, Thoenes, Thurn, Landskron, Eckert

(56) Entgegenhaltungen:
- EP-A- 0 530 582
- DE-A1- 2 712 910
- GB-A- 1 591 317
- US-A- 3 692 447
- US-A- 4 874 305
- US-A- 5 034 179

## Beschreibung

Die Erfindung betrifft eine Vorrichtung zur Herstellung mehrschichtiger, koextrudierter schlauchartiger Vorformlinge aus thermoplastischem Kunststoff. Eine solche Vorrichtung hat einen Koextrusionskopf mit mehreren im wesentlichen koaxial angeordneten Fließkanälen, die jeweils aus einer einzigen Zuflussöffnung mit einer Materialschmelze gespeist werden, die ringförmig verteilt wird und entlang einem Kegelstumpfring fließt, wobei die Fließkanäle in einen sich trichterförmig erweiternden ringförmigen gemeinsamen Fließkanal übergehen. In einem Ringspeicherraum ist ein verschiebbarer Ringkolben hin- und herbewegbar, wobei sich an den Ringspeicherraum ein Ausgabe-Ringkanal mit einem absperrbaren ringförmigen Düsenspalt anschließt.

Aus der EP 0 326 584 B1 desselben Anmelders ist ein Verfahren und eine Vorrichtung zur Hersieliung großvolumiger Hohlkörper aus Kunststoff mit mehrschichtigen Wandungen bekannt. Die Spaltbreiten im jeweiligen Fließkanal sind entlang dem Ringumfang konstant. Aufgrund der einseitigen Zuführung der Materialschmelze entstehen somit entlang des Rings und auch entlang des Kegelstumpfringes unterschiedliche Druckverhältnisse, die ein gleichmäßiges Fließen der Materialschmelze beeinträchtigen, wodurch Materialvermischungen entstehen, die zu einer Qualitätseinbuße am Vorformling führen.

Weiterhin ist aus der DE 195 45 441 A1 desselben Anmelders eine Vorrichtung zur Herstellung schalenartiger Formteile aus thermoplastischem Kunststoff bekannt. Auch bei dieser Vorrichtung wird ein Koextrusionskopf eingesetzt, in weichem die Materialschmelze in mehreren Schichten fließt und hieraus ein mehrschichtiger schlauchartiger Vorformling erzeugt wird.

US-A-5,034,179 ist nächstliegender Stand der Technik und beschreibt ein Verfahren und eine Vorrichtung zur diskontinuierlichen Herstellung mehrschichtiger, koextrudierter schlauchartiger Vorformlinge aus thermoplastischem Kunststoff. Mehrere Materialschmelzen fließen in einen sich trichterförmig erweiternden ringförmigen gemeinsamen Fließkanal. Der Fließkanal mündet in einem Ringspeicherraum, in welchem ein verschiebbarer Ringkolben hin- und herbewegbar ist.

Dokument EP-A-0 530 582 beschreibt eine Vorrichtung zum Verarbeiten von thermoplastischem Kunststoff, die eine Einspeisungsvorrichtung umfasst, der über eine angeschlossene Extruderleitung die Materialschmelze zugeführt wird. Die Einspeisungsvorrichtung enthält eine Zuführ-Ausnehmung, die während des Hubs des Ringkolbens die Materialschmelze an die Zuflussöffnung weiterleitet.

Dokument GB-A-1 591 317 zeigt eine Einspeisevorrichtung, welche eine teleskopartige Zuführvorrichtung enthält, über die Kunstharz zur Ummantelung eines Stahlrohrs zuführbar ist.

Die vorliegende Erfindung baut auf dem Stand der Technik auf.

Es ist Aufgabe der Erfindung, eine Vorrichtung eingangs genannter Art anzugeben, bei der ein gleichmäßiges Fließen der mehrschichtigen Materialschmelze im Koextrusionskopf erreicht wird.

Eine weitere Aufgabe der Erfindung liegt darin, eine Vorrichtung mit einer einfachen Einspeisungsvorrichtung für die Zuführung der Materialschmelze anzugeben.

Eine weitere Aufgabe der Erfindung liegt darin, eine Vorrichtung anzugeben, bei der die Befüllung des Ringspeicherraumes mit Materialschmelze schonend und mit hoher Gleichmäßigkeit erfolgt.

Diese Aufgaben werden durch die in den unabhängigen Ansprüchen angegebenen Gegenstände gelöst. Vorteilhafte Weiterbildungen sind in den abhängigen Ansprüchen angegeben.

Im folgenden wird die Erfindung anhand von Ausführungsbeispielen erläutert. Darin zeigt
- Figur 1: einen Längsschnitt durch einen Koextrusionskopf,
- Figur 2: einen Querschnitt durch den ersten Verteilerring,
- Figur 3: einen Querschnitt durch den ersten Fließkanal,
- Figur 4: einen Querschnitt durch den zweiten Verteilerring,
- Figur 5: einen Querschnitt durch den zweiten Fließkanal,
- Figur 6: einen Ausschnitt zur Darstellung der Spaltbreiten,
- Figur 7: einen Längsschnitt durch den Koextrusionskopf mit Drosselscheibe und Entlastungszylinder,
- Figur 8: einen Längsschnitt durch den Koextrusionskopf mit einer ersten Einspeisungsvorrichtung, und
- Figur 9: einen Längsschnitt durch eine zweite Einspeisungsvorrichtung.

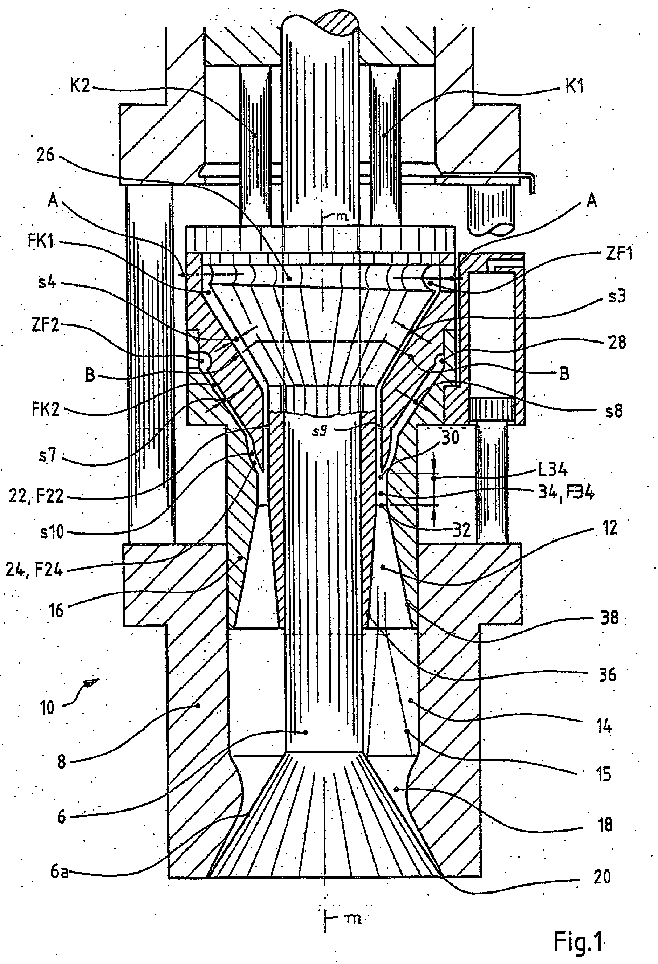

In der Figur 1 der Zeichnung ist ein Koextrusionskopf 10 teilweise im Längsschnitt dargestellt, der einen Speichermantel 8 umfasst, welcher einen Ringspeicherraum 14 umgibt, der die auszustoßende Materialschmelze aufnimmt. Der Speichermantel 8 ist mit einem nicht dargestellten Gehäuse verbunden. Eine erste Materialschmelze wird über eine Zuflussöffnung ZF1 einem ersten Verteilerring 26 zugeführt, der zu einem Ringkolben 16 gehört. Dieser Ringkolben 36 ist in seiner Längsachse verschiebbar und gleitet entlang einer Pinole 6 und dem Speichermantel 8. Der Ringkolben 16 ist mit einer Hydraulikeinrichtung (nicht dargestellt) über Kolbenstangen K1, K2 verbunden. Ebenso ist die Pinole 6 an ihrem oberen Ende mit einer Hydraulikeinrichtung (nicht dargestellt) verbunden.

Die Materialschmelze wird horizontal entlang dem ersten Verteilerring 26 gefördert und fließt gleichzeitig abwärts entlang einem ringförmigen Fließkanal FK1, der als Kegelstumpfring ausgebildet ist. Die abwärts fließende erste Materialschmelze gelangt dann in einen ersten Zylinderring 22 und von dort zu einer Mündungsstelle 30, wo eine zweite Materialschmelze einmündet. Diese zweite Materialschmelze ist über eine diametral zur Zuführöffnung ZF1 angeordnete zweite Zuführöffnung ZF2 zugeführt, wird von dort ebenfalls über einen zugehörigen umlaufenden zweiten Verteilerring 28 verteilt und gelangt in den kegelstumpfringförmigen zweiten Fließkanal FK2. Von dort fließt die zweite Materialschmelze in einen zweiten Zylinderring 24 und weiter bis zur Mündungsstelle 30.

Das Fließen der beiden Materialschmelzen soll so erfolgen, dass die Grenzfläche zwischen den beiden Materialschmelzen möglichst glatt verläuft und diese nicht durch Wirbel gestört ist. An die Mündungsstelle 30 schließt sich eine Beruhigungsstrecke an, die als gemeinsamer Zylinderring 34 ausgebildet ist. Diese Beruhigungsstrecke sorgt dafür, dass nach der Vereinigung der Materialschmelzen an der Mündungsstelle 30 sich ein gleichmäßiger Fluss der beiden Materialschmelzen ergibt, wodurch ein glatter Verlauf der Grenzfläche zwischen den beiden Materialschmelzen erzeugt wird. Die beiden Materialschmelzen fließen dann bis zu einer Erweiterungsstelle 32, wo die beiden Materialschmeizen in einen sich erweiternden gemeinsamen Fließkanal 12 einmünden. Dieser Fließkanal 12 hat im Querschnitt eine Trichterform und ist im Ringkolben 16 ringförmig ausgebildet.

Zu Beginn des Füllvorganges befindet sich der Ringkolben 16 in seiner unteren Stellung, wie dies schematisch gestrichelt in Verbindung mit dem Bezugszeichen 15 angedeutet ist. Der trichterförmige gemeinsame Fließkanal 12 ist mit den beiden Materialschmelzen noch von dem vorherigen Produktionsvorgang zum Erzeugen eines schlauchartigen Vorformlings gefüllt. Durch das Nachfließen der beiden Materialschmelzen wird der Ringkolben 16 nach oben bewegt. Aufgrund der Trichterform des gemeinsamen Fließkanals 12 und der weiteren Geometrie für die Materialschmetzenführung bleibt die sich zwischen den beiden Materialschmelzen ausbildende Grenzfläche weitgehend glatt und wird nicht verwirbelt.

Wenn der Ringkolben 16 seinen oberen Arbeitspunkt erreicht hat, so wird die Pinole 6 nach unten bewegt und öffnet mit ihrem Düsenpilz 6a einen ringförmigen Düsenspalt 20, so dass bei einer Abwärtsbewegung des Ringkolbens 16 der schlauchartige Vorformling mit der Grenzfläche zwischen den Materialschmelzen ausgestoßen wird. Zur Aufrechterhaltung des glatten Verlaufs der Grenzfläche ist ein Ausgabe-Ringkanal 18 in seiner Geometrie speziell ausgebildet. Mit Abschluss des Ausstoßvorganges wird die Pinole 6 wieder nach oben bewegt und schließt den Düsenspalt 20, woraufhin ein neuer Auffüllvorgang für den Ringspeicherraum 14 beginnt.

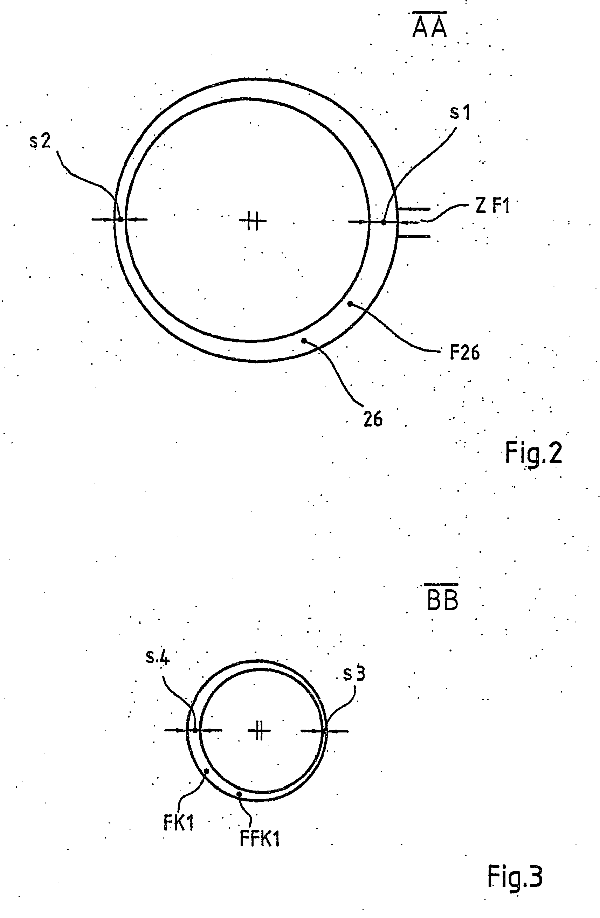

Im folgenden werden geometrische Merkmale des Aufbaus des Ringkolbens 16 erläutert, die bewirken, dass die zugeführte Materialschmelze gleichmäßig fließt. Wie anhand der Figur 1 zu erkennen ist, ist der erste Verteilerring 26 nicht symmetrisch bezüglich der Mittetachse m ausgebildet. Vielmehr hat er im Bereich der ersten Zuführöffnung ZF1 eine größere Querschnittfläche als auf der von der Zuführöffnung ZF1 gegenüberliegenden Seite. Figur 2 verdeutlicht dies anhand eines Schnitts entlang der Linie A-A. Die Spaltbreite s1 des ersten Verteilerrings 26 ist im Bereich der ersten Zuflussöffnung ZF1 größer als die Spaltbreite s2 auf der gegenüberliegenden Seite. Von diesem Verteilerring 26 gelangt die Materialschmelze in den ersten ringförmigen Fließkanal FK1, von dem in Figur 3 ein Querschnitt längs der Linie B-B gezeigt ist. Die effektive Spaltbreite s3, d.h. die Spaltbreite in Richtung der Normalen, etwa in der Mitte des Kegelstumpfringes ist auf der Seite der ersten Zuflussöffnung ZF1 kleiner als die Spaltbreite s4 auf der gegenüberliegenden Seite. Die ringförmige Querschnittsfläche F26 in der Mitte des ersten Verteilerrinas 26 entlang dem Schnitt ist größer als die mittlere effektive Querschnittsfläche FFK1 des ersten Fließkanals PK1 entlang dem Srhnift BB. Somit ergibt sich eine Drosselung des Materialschmelzflusses und eine Druckzunahme.

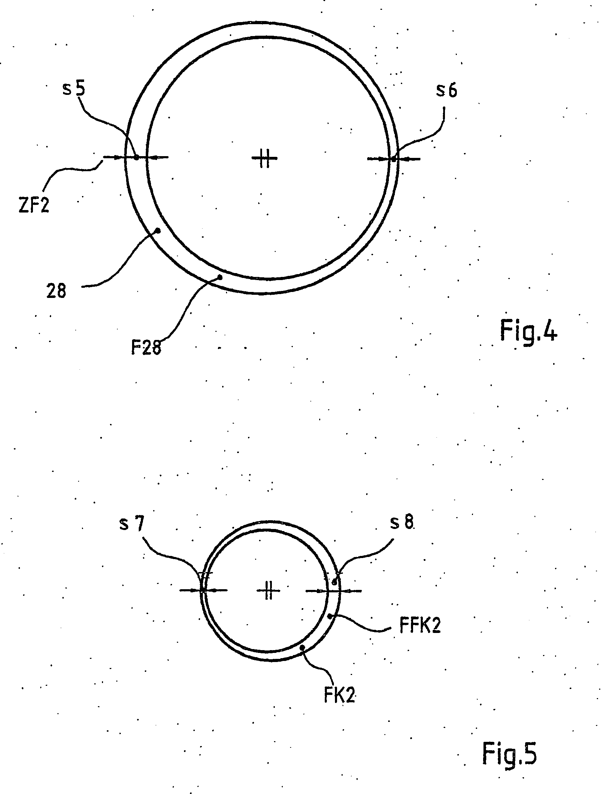

Die Figuren 4 und 5 zeigen die Verhältnisse bezogen auf die zweite Materialschmelze, Die Spaltbreite s5 des zweiten Verteilerrings 28 ist auf der Seite der zweiten Zuflussöffnung ZF2 größer als die Spaltbreite s6 auf der abgewandten Seite. Im zweiten Fließkanal FK2 ist die Spaltbreite s7 auf der Seite der eiten Zufiussöffnung ZF2 kleiner als die Spaltbreite s8 auf der gegenüberliegenden Seite. Auch hier ergibt sich eine Druckzunahme beim Fließen der Materialschmelze von der Zuflussöffnung ZF2 in den zweiten Fließkanal FK2, da die ringförmige Querschnittsfläche F28 größer ist als die Querschnittsfläche FFK2 des zweiten Fließkanals FK2.

Die erste Materialschmelze gelangt nach dem Durchlaufen des ersten Fließkanals FK1 in den ersten Zylinderring 22 (vgl. Figur 1). Dieser zylinderring 22 hat auf seiner Länge und seinem Umfang eine konstante Spaltbreite s9. Diese Spaltbreite s9 ist so ausgelegt, dass die Querschnittsfläche F22 des Zylinderrings 22 größer ist als die Querschnittsfläche FFK1 am Ende des ersten Fließkanals FK1, wobei der Fließkanal FK1 in den Zylinderring 22 übergeht. Vorzugsweise ist F22 doppelt so groß wie FFK1. Analoge Verhältnisse gelten für die zweite Materialschmelze, die vom zweiten Fließkanal FK2 in den Zylinderring 24 mündet. Dieser Zylinderring 24 hat eine konstante Spaltbreite s10, die so beschaffen ist, dass die Querschnittsfläche F24 größer ist als die Querschnittsfläche FFK2 am Ende des zweiten Fließkanals FK2. Durch die genannte geometrische- Anordnung und die sich daraus ergebende asymmetrische Führung und Drosselung des Flusses der Materialschmelze wird ein gleichmäßiges Fließen vom Verteilerring 26 bzw. 28 über die kegelstumpfiörmigen Fließkanäle FK1 bzw. FK2 zum Zylinderring 22 bzw. 24 erreicht.

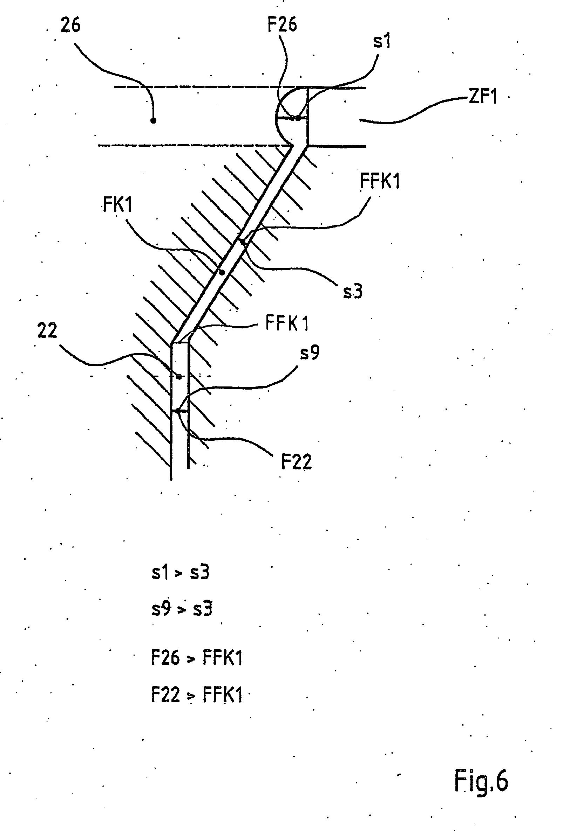

Figur 6 zeigt die geometrischen Verhältnisse anhand eines Ausschnitts mit Verteilerring 26, Fließkanal FK1 und Zylinderring 22 sowie die zugehörigen Größenverhältnisse für die Spaltbreiten s1, s3, s9 und die Ringflächen F26, FFK1 und F22. Die bei ZF1 zufließende erste Materialschmelze verteilt sich gleichmäßig in horizontaler Richtung entlang dem Verteilerring 26, und fließt nicht sogleich in vertikaler Richtung in den ersten Fließkanal FK1 ab, da dieser im Bereich der Zuflussöffnung ZF1 eine verringerte Spaltbreite. s3 < s4 hat und F26 > FFK1 ist. Da s4 > s3 ist, ist die Fließgeschwindigkeit bei s3 größer als bei s4, bei sonst gleichem Materialvolument/Zeit. Im Zylinderring 22 mit s9 > s3 erfolgt eine Materialberuhigung und eine Geschwindigkeitsangleichung des Materialstroms in Umfangsrichtung des Zylinderrings 22 gesehen, mit der Wirkung, dass an der Mündung 30 die erste Materialschmelze entlang dem Umfang gleiche Strömungsgeschwindigkeit hat.

Die Abmessungen für die Spaltbreiten s1 bis s10 sind in Abhängigkeit vom Material für die erste Materialschmelze und die zweite Materialschmelze zu wählen. Typischerweise kann die Querschnittfläche F22 bzw. F24 des Zylinderrings 22 bzw. 24 höchstens halb so groß gewählt werden, wie die Querschnittfläche F26 bzw. F28 des jeweiligen Verteilerrings 26 bzw. 28.

Die beiden Materialschmelzen treffen an der Mündungsstelle 30 aufeinander und durchlaufen gemeinsam den gemeinsamen Zylinderring 34, der wiederum Beruhigungsstrecke bildet, um ein Verwirbeh der Grenzschicht zwischen den beiden Materialschmelzen zu vermeiden. Die Querschnittfläche F34 dieses gemeinsamen Zylinderrings 34 entspricht der Summe der Querschnittflächen F22 und F24 der Zylinderringe 22 und 24 (F34 = F22 + F24). Die Länge L34 des gemeinsamen Zylinderrings 34 ist vorzugsweise gleich oder größer als das Zweifache der Summe der Spaltbreiten von Zylinderring 22 und Zylinderring 24 (L34 ≥ 2 (s9 + s10)).

Die zusammengeführten Materiaischmelzen gelangen nach dem Durchsetzen der Beruhigungsstrecke und der Erweiterungsstelle 32 in den sich trichterförmig erweiternden gemeinsamen-Fließkanal 12. Dieser Fließkanal 12 ist durch eine innere Kegelstumpf-Mantelfäche 36 und eine äußere Kegelstumpf-Mantelfläche 38 begrenzt. Im Längsschnitt gesehen bilden diese Kegelstumpf-Mantelflächen 36, 38 einen asymmetrischen Trichter, wobei ein erster Winkel zwischen der Vertikalen und der inneren Kegelstumpf-Mantelfläche 36 kleiner ist als ein zweiter Winkel zwischen der Vertikalen und der äußeren Kegelstumpf-Mantelfläche 38. Dieser erste Winkel kann typischerweise im Bereich von 0° liegen, d.h. die innere Kegelstumpf-Mantelfläche 36 kann als Zylinderfläche ausgebildet sein.

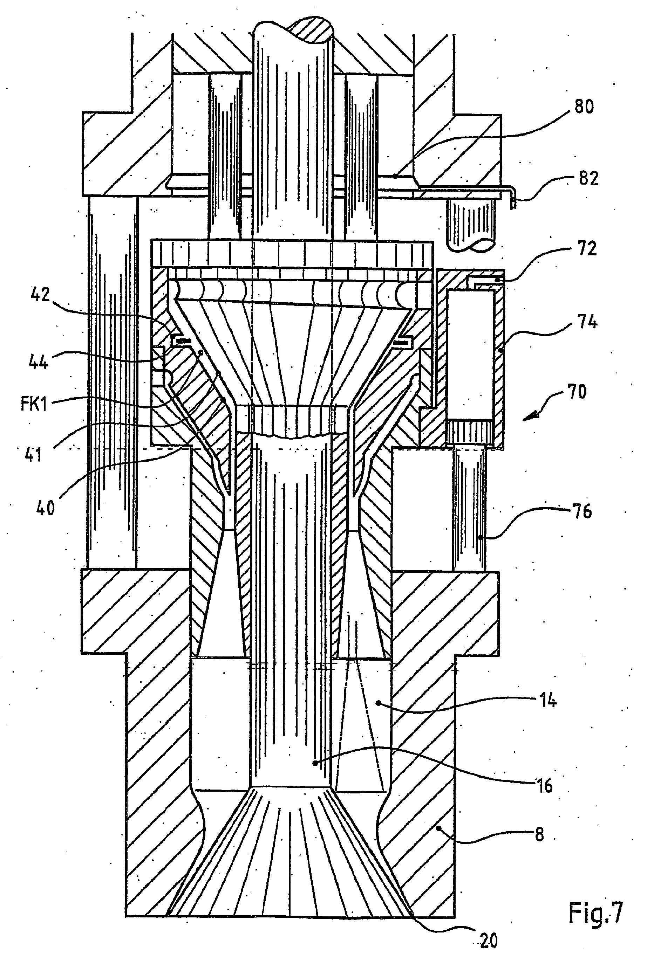

Figur 7 zeigt ein Beispiel, bei dem der Materialfluss innerhalb des ersten Fließkanals FK1 durch Drosselung mit Hilfe einer Drosselscheibe gesteuert wird. Der Fließkanal FK1 ist als Kegelstumpfring ausgebildet und ist begrenzt durch eine äußere Wand 40 und eine innere Wand 41. In der äußeren Wand. 40 ist ein ringförmiger Einschnitt 42 eingelassen, der eine Drosselscheibe 44 hält. Diese Drosselscheibe 44 ist zum Drosseln des Durchflusses der Materialschmelze im Fließkanal FK1 in den zugehörigen Kegelstumpfring bewegbar. Vorzugsweise wird eine elastische Drosselscheibe 44 verwendet, deren Innendurchmesser mit Hilfe einer Versteilvorrichtung verändert wird. Eine Verkleinerung dieses Innendurchmessers bewirkt dann eine Drosselung des Materialflusses. In der Figur 7 ist lediglich eine Drosselscheibe 44 für den ersten Fließkanal FK1 gezeigt. Es ist auch möglich, lediglich in einem der beiden Fließkanäle FK1 oder FK2 oder in beiden sowie weiteren Fließkanälen eine derartige Drosselvorrichtung anzuordnen.

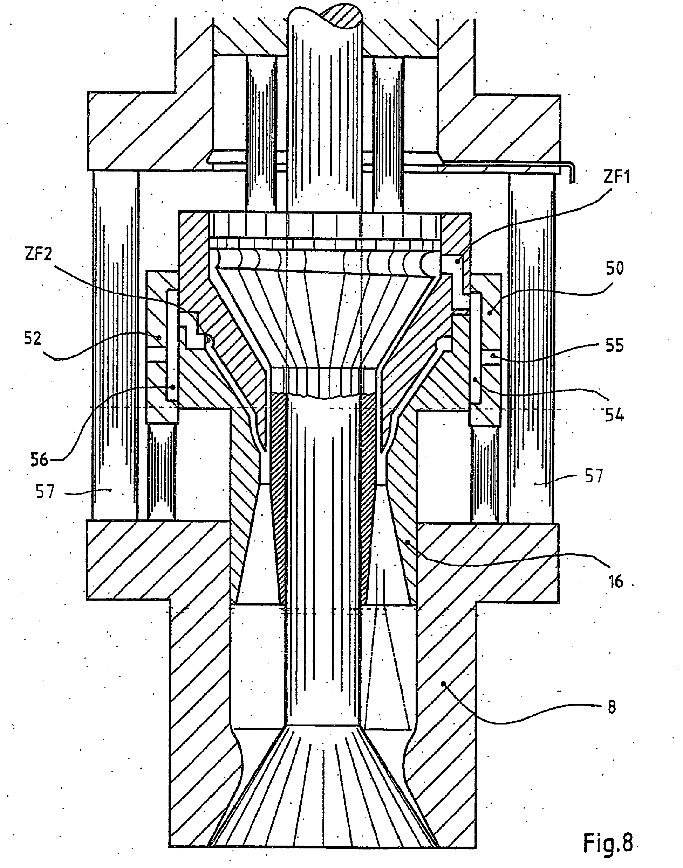

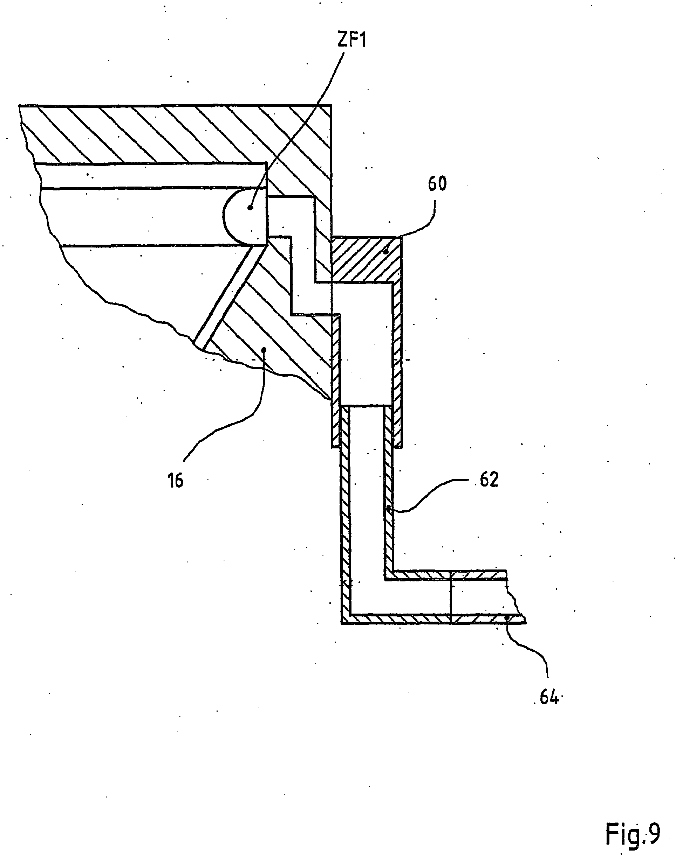

Die Figuren 8 und 9 zeigen Ausführungsbeispiele, bei denen eine spezielle Einspelsungsvorrichtung für die Zuführung der Materialschmelze verwendet wird. In Figur 8 ist die erste Zuflussöffnung ZF1 mit einer Einspeisungsvorrichtung 50 verbunden, die wiederum starr mit dem Gehäuse des Koextrusionskopfes 10 verbunden ist, beispielsweise gestützt durch eine Säule 57 ortsfest auf dem Speichermantel 8 sitzt. Wie weiter oben erwähnt, bewegt sich der Ringkolben 16 auf und ab. Die Einspeisungsvorrichtung 50 enthält eine Ausnehmung 54, die während des Hubs des Ringkolbens 16 die Materialschmelze an die Zuflussöffnung ZF1 weiterleitet. Die Ausnehmung 54 erhält die Materialschmelze über einen Eingangskanal 55, der starr mit einer Extruderleitung (nicht dargestellt) verbunden ist. Eine gleichartige Einspeisungsvorrichtung 52 mit einer Ausnehmung 56 ist auch für die zweite Materialschmelze vorgesehen, die der zweiten Zuflussöffnung ZF2 zugeführt ist. Die Ausnehmungen 54, 56 haben in vertikaler Richtung eine Länge entsprechend dem Hub des Ringkolbens 16. Die Einspeisungsvorrichtung 50, 52 ist vorzugsweise als Ringsegment ausgebildet und verläuft entlang dem Umfang des Ringkolbens 16. Gemäß diesem Beispiel muss die Extruderleitung beim Hub des Ringkolbens 16 keine Schwenkbewegungen ausführen, so dass bewegliche Teile eingespart werden können. Die Säulen 57 halten die Einspeisevorrichtungen 50, 52 und belassen genügend freien Raum um diese Vorrichtung 50, 52, so dass im Bereich der Ausnehmungen 54, 56 ausreichendes und dann verkrustendes Material leicht entfernt werden kann.

Figur 9 zeigt eine alternative Lösung für die Einspeisung. Die Zuflussöffnung ZF1 ist mit einem Zuführ-Zylinder 60 starr verbunden. Der Zuführ-Zylinder 60 führt somit die Hubbewegung des Ringkolbens 16 mit aus. In dem Zuführ-Zylinder 60 ist ein hohler Zuführkolben 62 verschiebbar aufgenommen. Der hohle Zuführkolben 62 ist ortsfest, beispielsweise starr mit dem Mantelring 8 verbunden. Der Zuführkolben 62 ist wiederum starr mit einer Extruderleitung 64 verbunden, die die Materialschmelze zuführt. Auch bei dieser Anordnung muss die Extruderleitung 64 keine Kipp- oder Schwenkbewegung entsprechend der Bewegung der Zuführöffnung ZF1 ausführen. Eine gleichartige Einspeisungsvorrichtung kann auch für die zweite Zuführöffnung ZF2 vorgesehen sein.

Figur 7 zeigt noch ein weiteres Beispiel, gemäß dem der Ringkolben 16 starr mit einer Hydraulik-Vorrichtung 70 verbunden ist. Diese Hydraulik-Vorrichtung wird über eine Hydraulik-Leitung 72 mit Hydraulik-Flüssigkeit beaufschlagt. Die Hydraulik-Vorrichtung 70 dient zur Entlastung und arbeitet so, dass sie einen Teil der Gewichtskraft des Ringkoibens 16 die beim Füllen des Ringspeicherraums 14 auf der in ihm befindlichen Materialschmelze lastet, übernimmt. Der Ringkolben 16 kann eine Gewichtskraft von mehreren Tonnen haben, so dass sich unter diesem Druck die Materialeigenschaften der Materialschmelze ändern können. Die Hydraulik-Vorrichtung 70 hebt somit einen Teil der Gewichtskraft beim Befüllen des Ringspeicherraums 14 auf. Beim Ausstoßen der Materialschmelze aus dem Ringspeicherraum 14 über die Ringdüse 20 wird die Hydraulik-Vorrichtung 70 unwirksam geschaltet, so dass das Gewicht des Ringkolbens 16 das Ausstoßen unterstützt. Vorteilhafterweise hat die Hydraulik-Vorrichtung 70 einen Zylinder 74 mit einem Kolben 76, wobei der Zylinder 74 starr mit dem Ringkolben 16 verbunden ist. Der Kolben 76 stützt sich gegen das Gehäuse oder den Ringmantel 8 ab, wodurch eine kompakte Anordnung erreicht wird. Vorteilhafterweise kann zu beiden Seiten des Ringkolbens 16 diametral gegenüberliegend jeweils eine Einheit mit Zylinder und Kolben angeordnet sein.

Gemäß einer weiteren Maßnahme ist oberhalb des Ringkolbens 16 eine Auffangvorrichtung 80 angeordnet, die herabtropfendes Hydraulik-Öl von den Hydraulik-Einrichtungen für den Ringkolben 16 und die Pinole 6 auffängt. Dieses Hydraulik-Öl würde auf die Kopfseite des im Betrieb heißen Ringkolbens 16 tropfen, was zu Verschmutzung und weiteren Nachteilen führt Über eine Abführleitung 82 wird das Hydraulik-Öl aus dem Bereich des Ringkolbens 16 herausgeleitet und abgeführt.

Die gezeigten Beispiele beziehen sich auf einen Koextrusionskopf, der zwei Materialschmelzen verarbeitet. Bei einer Verarbeitung von mehr als zwei Materialschmelzen sind entsprechend mehr Zuflussöffnungen, Verteilerringe, Fließkanäle etc. in analoger Weise vorzusehen. In der Praxis können fünf oder sogar sechs verschiedene Materialschmelzen verarbeitet werden, wodurch der Ringkolben 16 und die weiteren zugehörigen Konstruktionsteile einen komplexen Aufbau haben.

### Bezugszeichenliste

- 6: Pinole
- 8: Speichermantel
- 10: Koextrusionskopf
- 12: gemeinsamer Fließkanal
- 14: Ringspeicherraum
- ZF1: erste Zuflussöffnung
- ZF2: zweite Zuflussöffnung
- 16: Ringkolben
- K1, K2: Kolbenstangen
- 15: untere Stellung des Ringkolbens
- 13: Ausgabe-Ringkanal
- 20: Düsenspalt
- 22: erster Zylinderring
- 24: zweiter Zylinderring
- 26: erster Verteilerring
- 28: zweiter Verteilerring
- 30: Mündungsstelle
- 32: Erweiterungsstelle
- 34: gemeinsamer Zylinderring
- s1 bis s10: Spaltbreiten
- F26: Querschnittsfläche des ersten Verteilerrings
- F28: Querschnittsfläche des zweiten Verteilerrings
- FK1: erster Fließkanal
- FK2: zweiter Fließkanal
- FFK1: Querschnittsfläche des ersten Fließkanals
- FFK2: Querschnittsfläche des zweiten Fließkanals
- F22: Querschnittsfläche des ersten Zylinderrings
- F24: Querschnittsfläche des zweiten Zylinderrings
- F34: Querschnittsfläche des gemeinsamen Zylinderrings
- L34: Länge
- 36: innere Kegelstumpf-Mantelfläche
- 38: äußere Kegelstumpf-Mantelfläche
- 40: äußere Wand
- 4.1: innere Wand
- 42: Einschnitt
- 44: Drosselscheibe
- 50, 52: Einspeisungsvorrichtung
- 54, 56: Ausnehmung
- 55: Eingangskanal
- 57: Säulen
- 60: Zuführ-Zylinder
- 62: Zuführkolben
- 64: Extruderleitung
- 70: Hydraulik-Vorrichtung
- 72: Hydraulik-Leitung
- 74: Zylinder
- 76.: Kolben
- 80: Auffangvorrichtung
- 82: Abführleitung

## Patentansprüche

1. Vorrichtung zur Herstellung mehrschichtiger, koextrudierter schlauchartiger Vorformlinge aus thermoplastischem Kunststoff,
mit einem Koextrusionskopf (10) mit mehreren im wesentlichen koaxial angeordneten Fließkanälen (FK1, FK2),
die jeweils aus einer einzigen Zuflussöffnung (ZF1, ZF2) mit einer Materialschmelze gespeist werden, die in einem Verteilerring (26, 28) ringförmig verteilt wird und entlang einem Kegelstumpfring fließt,
wobei die Materialschmelzen in einen sich trichterförmig erweiternden ringförmigen gemeinsamen Fließkanal (12) fließen,
mit einem Ringspeicherraum (14), in welchem ein verschiebbarer Ringkolben (16) hin- und herbewegbar ist,
mit einem sich an den Ringspeicherraum (14) anschließenden Ausgabe-Ringkanal (18) mit einem absperrbaren ringförmigen Düsenspalt (20),
wobei die jeweilige Zuflussöffnung (ZF1, ZF2) mit einer Einspeisungsvorrichtung (50, 52) verbunden ist, die starr mit dem Koextrusionskopf (10) verbunden ist, **dadurch gekennzeichnet, dass** die Einspeisungsvorrichtung eine Zuführ-Ausnehmung (54, 56) hat, die während des Hubs des Ringkolbens (16) die Materialschmelze an die Zuflussöffnung (ZF1, ZF2) weiterleitet, und wobei der Einspeisungsvorrichtung (50, 52) die Materialschmelze über eine starr angeschlossene Extruderleitung zugeführt wird,
dass der verschiebbare Ringkolben (16) mit einer Hydraulik-Vorrichtung (70) verbunden ist, die einen Teil der Gewichtskraft des Ringkolbens (16) beim Füllen des Ringspeicherraums (14) mit der Materialschmelze übernimmt,
wobei die Hydraulik-Vorrichtung (70) beim Ausstoßen der Materialschmelze aus den Ringspeicherraum (14) unwirksam geschaltet ist,
und dass die Hydraulik-Vorrichtung (70) mindestens einen Zylinder (74) mit einem Kolben (76) enthält, wobei der Zylinder (74) mit dem Ringkolben (16) starr verbunden ist und der Kolben (76) sich gegen das Gehäuse (8) abstützt, das den Ringspeicherraum (14) enthält.

2. Vorrichtung nach Anspruch 1, wobei die Zuführ-Ausnehmung (54, 56) eine Länge entsprechend dem Hub des Ringkolbens (16) hat.

3. Vorrichtung nach Anspruch 2, wobei die Einspeisungsvorrichtung (50, 52) als Ringsegment ausgebildet ist.

4. Vorrichtung nach einem der vorhergehenden Ansprüche 1 bis 3, wobei für zwei unterschiedliche Materialschmelzen zwei Einspeisungsvorrichtungen (50, 52) vorgesehen sind, die diametral zueinander angeordnet sind.

5. Vorrichtung nach Anspruch 1, wobei zu beiden Seiten des Ringkolbens (16) diametral gegenüberliegend jeweils ein Zylinder (74) mit Kolben (76) angeordnet ist.

6. Vorrichtung nach einem der Ansprüche 1 bis 5, wobei oberhalb des Ringkolbens (16) eine Auffangvorrichtung (80) angeordnet ist, die HydraulikÖl von der Hydraulik-Einrichtung für den Ringkolben (16) und/oder von der Hydraulik-Einrichtung für die Pinole (6) auffängt.

7. Vorrichtung zur Herstellung mehrschichtiger, koextrudierter schlauchartiger Vorformlinge aus thermoplastischem Kunststoff,
mit einem Koextrusionskopf (10) mit mehreren im wesentlichen koaxial angeordneten Fließkanälen (FK1, FK2),
die jeweils aus einer einzigen Zuflussöffnung (ZF1, ZF2) mit einer Materialschmelze gespeist werden, die in einem Verteilerring (26, 28) ringförmig verteilt wird und entlang einem Kegelstumpfring fließt,
wobei die Materialschmelzen in einen sich trichterförmig erweiternden ringförmigen gemeinsamen Fließkanal (12) fließen,
mit einem Ringspeicherraum (14), in welchem ein verschiebbarer Ringkolben (16) hin- und herbewegbar ist,
mit einem sich an den Ringspeicherraum (14) anschließenden Ausgabe-Ringkanal (18) mit einem absperrbaren ringförmigen Düsenspalt (20),
**dadurch gekennzeichnet, dass** die jeweilige Zuflussöffnung (ZF1, ZF2) mit einem Zuführ-Zylinder (60) verbunden ist, der starr an dem verschiebbaren Ringkolben (16) befestigt ist und in dem ein ortsfest angeordneter hohler Zuführ-Kolben (62) verschiebbar aufgenommen ist, dem die Materialschmelze über eine mit ihm starr verbundene Extruderleitung (64) zugeführt ist,
dass der verschiebbare Ringkolben (16) mit einer Hydraulik-Vorrichtung (70) verbunden ist, die einen Teil der Gewichtskraft des Ringkolbens (16) beim Füllen des Ringspeicherraums (14) mit der Materialschmelze übernimmt,
wobei die Hydraulik-Vorrichtung (70) beim Ausstoßen der Materialschmelze aus den Ringspeicherraum (14) unwirksam geschaltet ist,
und dass die Hydraulik-Vorrichtung (70) mindestens einen Zylinder (74) mit einem Kolben (76) enthält, wobei der Zylinder (74) mit dem Ringkolben (16) starr verbunden ist und der Kolben (76) sich gegen das Gehäuse (8) abstützt, das den Ringspeicherraum (14) enthält.

## Claims

1. A device for producing multilayer, coextruded, tubular preforms made of thermoplastic material,
with a coextrusion head (10) with several essentially coaxially arranged flow channels (FK1, FK2),
each of which is fed from a single inlet opening (ZF1, ZF2) with a material melt which is annularly distributed in a distributor ring (26, 28) and flows along an annular conical frustum,
wherein the material melts flow into a common annular flow channel (12) that widens like a funnel,
with an annular accumulation chamber (14), in which a displaceable annular piston (16) can be reciprocated,
with an annular discharge channel (18) that follows the annular accumulation chamber (14) and has an annular extrusion orifice (20) that can be closed,
wherein each inlet opening (ZF1, ZF2) is connected with a feeding device (50, 52), which is rigidly connected with the coextrusion head (10), **characterized in that** the feeding device has a feed recess (54, 56), which further conveys the material melt to the inlet opening (ZF1, ZF2) during the stroke of the annular piston (16), and wherein the material melt is supplied to the feeding device (50, 52) through a rigidly connected extruder line,
**in that** the displaceable annular piston (16) is connected with a hydraulic system (70), which takes some of the weight of the annular piston (16) during the filling of the annular accumulation chamber (14) with the material melt,
wherein the hydraulic system (70) is switched to an inoperative status while the material melt is being discharged from the annular accumulation chamber (14),
and **in that** the hydraulic system (70) has at least one cylinder (74) with a piston (76), with the cylinder (74) being rigidly connected with the annular piston (16), and with the piston (76) being supported on the housing (8) that encloses the annular accumulation chamber (14).

2. The device according to claim 1, wherein the feed recess (54, 56) has a length equal to the stroke of the annular piston (16).

3. The device according to claim 2, wherein the feeding device (50, 52) is designed as an annular segment.

4. The device according to one of the preceding claims 1 to 3, wherein two feeding devices (50, 52) arranged diametrically to each other are provided for two different material melts.

5. The device according to claim 1, wherein one cylinder (74) and one piston (76) each are installed on diametrically opposite sides of the annular piston (16).

6. The device according to one of the claims 1 to 5, wherein a collecting device (80) is arranged above the annular piston (16) for collecting hydraulic oil from the hydraulic system for the annular piston (16) and/or from the hydraulic system for the torpedo (6).

7. A device for producing multilayer, coextruded, tubular preforms made of thermoplastic material,
with a coextrusion head (10) with several essentially coaxially arranged flow channels (FK1, FK2),
each of which is fed from a single inlet opening (ZF1, ZF2) with a material melt which is annularly distributed in a distributor ring (26, 28) and flows along an annular conical frustum,
wherein the material melts flow into a common annular flow channel (12) that widens like a funnel,
with an annular accumulation chamber (14), in which a displaceable annular piston (16) can be reciprocated,
with an annular discharge channel (18) that follows the annular accumulation chamber (14) and has an annular extrusion orifice (20) that can be closed,
**characterized in that** each inlet opening (ZF1, ZF2) is connected with a feed cylinder (60), which is rigidly mounted on the displaceable annular piston (16) and holds a movable hollow feed piston (62), which is mounted in a stationary way and to which the material melt is supplied by an extruder line (64) that is rigidly connected with it,
**in that** the displaceable annular piston (16) is connected with a hydraulic system (70), which takes some of the weight of the annular piston (16) during the filling of the annular accumulation chamber (14) with the material melt,
wherein the hydraulic system (70) is switched to an inoperative status while the material melt is being discharged from the annular accumulation chamber (14),
and **in that** the hydraulic system (70) has at least one cylinder (74) with a piston (76), with the cylinder (74) being rigidly connected with the annular piston (16), and with the piston (76) being supported on the housing (8) that encloses the annular accumulation chamber (14).

## Revendications

1. Dispositif de fabrication de préformes multicouches co-extrudées de type tuyau, à partir d'une matière thermoplastique, ledit dispositif comprenant
une tête de co-extrusion (10) comportant plusieurs canaux d'écoulement (FK1,FK2) disposés sensiblement coaxialement, qui sont chacun alimentés, par une ouverture d'alimentation unique (ZF1,ZF2), en matière fondue qui est distribuée annulairement dans une bague de distribution (26,28) et qui s'écoule le long d'une bague tronconique,
les matières fondues s'écoulant dans un canal d'écoulement commun (12) qui a une forme annulaire et qui s'évase en entonnoir,
un espace de stockage annulaire (14), dans lequel un piston annulaire mobile (16) se déplace suivant un mouvement alternatif, et
un canal annulaire de sortie (18), qui se raccorde à l'espace de stockage annulaire (14) et qui comporte une fente d'extrusion annulaire obturable (20),
l'ouverture d'alimentation respective (ZF1,ZF2) étant raccordée à un dispositif d'alimentation (50,52) qui est relié rigidement à la tête de co-extrusion (10),
**caractérisé en ce que** le dispositif d'alimentation possède un évidement d'amenée (54,56) qui guide, pendant la course du piston annulaire (16), la progression de la matière fondue en direction de l'ouverture d'alimentation (ZF1,ZF2), la matière fondue étant amenée au dispositif d'alimentation (50, 52) par un conduite d'extrudeuse raccordée rigidement,
**en ce que** le piston annulaire mobile (16) est relié à un dispositif hydraulique (70) qui assume une partie du poids du piston annulaire (16) lors du remplissage de l'espace de stockage annulaire (14) avec la matière fondue,
le dispositif hydraulique (70) étant désactivé lorsque la matière fondue est éjectée de l'espace de stockage annulaire (14),
et **en ce que** le dispositif hydraulique (70) contient au moins un cylindre (74) doté d'un piston (76), le cylindre (74) étant relié rigidement au piston annulaire (16) et le piston (76) étant en appui contre le boîtier (8) qui contient l'espace de stockage annulaire (14).

2. Dispositif selon la revendication 1, dans lequel l'évidement d'amenée (54,56) a une longueur qui correspond à la course du piston annulaire (16).

3. Dispositif selon la revendication 2, dans lequel le dispositif d'alimentation (50,52) est conformé en segment annulaire.

4. Dispositif selon l'une des revendications précédentes 1 à 3, dans lequel il est prévu, pour deux matières fondues différentes, deux dispositifs d'alimentation (50,52) qui sont agencés de façon diamétralement opposée l'un par rapport à l'autre.

5. Dispositif selon la revendication 1, dans lequel un cylindre (74) doté d'un piston (76) est disposé de chaque côté du piston annulaire (16), lesdits cylindres étant diamétralement opposés l'un à l'autre.

6. Dispositif selon l'une des revendications 1 à 5, dans lequel un dispositif de réception (80) est agencé au-dessus du piston annulaire (16) et reçoit l'huile hydraulique du dispositif hydraulique destiné au piston annulaire (16) et/ou du dispositif hydraulique destiné à la torpille (6).

7. Dispositif de fabrication de préformes multicouches co-extrudées de type tuyau, à partir d'une matière thermoplastique, ledit dispositif comprenant
une tête de co-extrusion (10) comportant plusieurs canaux d'écoulement (FK1,FK2) disposés sensiblement coaxialement, qui sont chacun alimentés, par une ouverture d'alimentation unique (ZF1,ZF2), en matière fondue qui est distribuée annulairement dans une bague de distribution (26,28) et qui s'écoule le long d'une bague tronconique, les matières fondues s'écoulant dans un canal d'écoulement commun (12) qui a une forme annulaire et qui s'évase en entonnoir,
un espace de stockage annulaire (14), dans lequel un piston annulaire mobile (16) se déplace suivant un mouvement alternatif, et
un canal annulaire de sortie (18), qui se raccorde à l'espace de stockage annulaire (14) et qui comporte une fente d'extrusion annulaire obturable (20),
**caractérisé en ce que** l'ouverture d'alimentation respective (ZF1,ZF2) est raccordée à un cylindre d'amenée (60) qui est fixé rigidement au piston annulaire mobile (16), et dans lequel est reçu de façon mobile un piston d'amenée creux (62) qui est disposé de façon stationnaire et auquel la matière fondue est amenée par une conduite d'extrudeuse (64) qui est reliée rigidement audit piston d'amenée creux,
**en ce que** le piston annulaire mobile (16) est relié à un dispositif hydraulique (70) qui assume une partie du poids du piston annulaire (16) lors du remplissage de l'espace de stockage annulaire (14) avec la matière fondue,
le dispositif hydraulique (70) étant désactivé lorsque la matière fondue est éjectée de l'espace de stockage annulaire (14),
et **en ce que** le dispositif hydraulique (70) contient au moins un cylindre (74) doté d'un piston (76), le cylindre (74) étant relié rigidement au piston annulaire (16), et le piston (76) étant en appui contre le boîtier (8) qui contient l'espace de stockage annulaire (14).
